# DEMANDE DE BREVET EUROPEEN

(11) **EP 0 797 177 A1**
(43) Date de publication de la demande: **24.09.1997**
(21) Numéro de dépôt: 96400592.0
(22) Date de dépôt: 21.03.1996
(51) Int. Cl.: G08B 15/00, G08B 13/196

(54) **Procédé et dispositif de télésurveillance par caméras mobiles sur rails**

(71) Demandeur: FLUIDELEC, F-78532 Buc Cédex (FR)
(72) Inventeur: Douard, Pierre-René, 78960 Voisins le Bretonneux (FR)
(74) Mandataire: de Saint-Palais, Arnaud Marie

(57) **Abrégé**

Le procédé selon l'invention utilise une caméra (1) équipée d'un zoom, et montée orientable dans toutes les directions sur une motrice mobile sur rails (2) dans un tunnel sans tain (9), la motrice, l'orientation de la caméra (1) et le zoom étant commandés à l'aide d'un manipulateur (7), les images prises par la caméra (1) étant transmises à un calculateur (5) et affichées sur un écran (6), ledit procédé comprenant : le réglage de la position, de l'orientation et du zoom de la caméra (1) de manière à visualiser sur l'écran (6) la plus grande partie de la zone à surveiller, la détection et le marquage d'une cible, la poursuite de la cible durant laquelle sont déterminés le sens et la vitesse de déplacement de la motrice, l'orientation de la caméra (1) et le réglage du zoom de manière à centrer la cible sur l'écran, et l'enregistrement des images dès qu'une cible est marquée.

## Description

La présente invention concerne un procédé et un dispositif de télésurveillance utilisant des caméras vidéo qui transmettent des images des lieux surveillés vers un poste de surveillance où des opérateurs peuvent observer les images transmises sur des écrans de télévision.

Elle s'applique notamment, mais non exclusivement, à la surveillance de lieux tels que des entrepôts, des supermarchés, des péages d'autoroute, des gares, etc....
Les dispositifs de ce type sont constitués, pour la plupart, d'un réseau de caméras vidéo fixes dont l'implantation géographique est déterminée de manière à couvrir au maximum la zone à surveiller. Ces dispositifs se révèlent faciles à repérer par les malfaiteurs et très inefficaces dès que la zone à surveiller comporte des volumes susceptibles de masquer les personnes qui s'y déplacent.

Pour supprimer cet inconvénient, la Demanderesse a envisagé de monter les caméras sur des motrices circulant sans bruit sur des rails dans des tunnels sans tain, de manière à les rendre invisibles pour les personnes se trouvant sur la zone surveillée. Un tel dispositif comprend en outre un moniteur sur lequel s'affiche l'image prise par la caméra, deux manipulateurs, le premier permettant de commander l'orientation et le zoom de la caméra, tandis que l'autre manipulateur permet de commander le sens de déplacement avant-arrière et la vitesse de la motrice qui peut atteindre 3 m/s. Ce dispositif comprend également un clavier permettant d'entrer des commandes, notamment pour déclencher l'enregistrement des images reçues sur un magnétoscope.

Il s'avère à l'usage que ces dispositifs de surveillance présentent une limite d'utilisation. Etant donné que chaque ensemble motrice - caméra est commandé à l'aide de deux manipulateurs et d'un clavier, il est nécessaire d'employer un opérateur par caméra. Par ailleurs, pour obtenir une bonne couverture visuelle de la zone à surveiller, il est nécessaire de disposer entre trois et cinq tronçons de rails indépendants sur chacun desquels circule une motrice portant une caméra.
En outre, si le site à surveiller comporte plusieurs niveaux, le nombre d'opérateurs peut rendre le dispositif inexploitable.

Pour limiter le nombre de caméras, on a déjà proposé d'interconnecter les portions de rails par des aiguillages. Cette solution n'est pas pleinement satisfaisante car les aiguillages constituent des dispositifs supplémentaires à télécommander.

La présente invention a notamment pour but de diminuer le nombre de caméras requises pour surveiller une zone importante, et de doter le dispositif décrit d'une assistance par ordinateur pour le pilotage d'une caméra automotrice équipée d'un zoom commandable à distance.

A cet effet, elle propose un procédé de télésurveillance utilisant au moins une caméra équipée d'un zoom, fixée par l'intermédiaire d'une tourelle orientable dans toutes les directions sur une motrice mobile sur rails dans un tunnel sans tain, la motrice, l'orientation et le zoom de la caméra étant commandés à l'aide d'un manipulateur, les images prises par la caméra étant transmises à un poste de surveillance comprenant un moniteur sur l'écran duquel elles sont affichées.

Ce procédé est caractérisé en ce qu'il comprend les étapes suivantes :
- le réglage de la position, de l'orientation et du zoom de la caméra à des valeurs respectives prédéterminées de manière à visualiser sur l'écran du moniteur la plus grande partie de la zone à surveiller,
- la détection et le marquage d'une cible par désignation de celle-ci d'une façon compréhensible par le calculateur,
- la poursuite de la cible durant laquelle sont déterminés les déplacements de la cible, et en fonction de ces déplacements, le sens de déplacement de la motrice et sa vitesse, l'orientation de la caméra, et la valeur de réglage du zoom, de manière à centrer la cible sur l'écran, et
- l'enregistrement des images à partir de l'instant où la cible est détectée et marquée.

Selon un premier mode d'exécution de l'invention, la détection de la cible est effectuée par l'opérateur qui observe les images transmises sur l'écran du moniteur, la position de la cible et ses déplacements sont introduits par l'opérateur au moyen d'un marqueur affiché sur l'écran en surimpression sur l'image, que l'opérateur peut déplacer à l'aide d'un manipulateur pour le maintenir sur la cible.

De cette manière, un seul manipulateur est nécessaire pour commander à la fois, le sens de déplacement de la motrice et sa vitesse, l'orientation de la caméra, et le zoom.

Selon un second mode d'exécution, le poste de surveillance est équipé d'un dispositif de reconnaissance de forme et le procédé selon l'invention comprend en outre la mémorisation de l'assemblage de couleurs caractéristique de la cible, les déplacements de la cible durant sa poursuite étant déterminés par la recherche de l'assemblage de couleurs mémorisé dans les images transmises au poste de surveillance.

Cette disposition permet de simplifier de manière importante le travail de l'opérateur qui n'a plus qu'à désigner la cible qu'il désire poursuivre à l'aide d'un marqueur qu'il peut déplacer sur l'écran au moyen d'un manipulateur, et déclencher ensuite la poursuite qui se déroule automatiquement pour positionner au mieux la caméra par rapport à la cible. L'opérateur peut ainsi se voir confier la télécommande de plusieurs caméras disposées de manière à pouvoir assurer une visibilité complète de la zone à surveiller.

Selon une particularité de l'invention, ce procédé comporte un mode entièrement automatique comprenant :
- la mémorisation en tant qu'image de référence de l'image reçue lorsque la position, l'orientation et le zoom de la caméra sont réglées auxdites valeurs respectives prédéterminées,
- la comparaison périodique de l'image de référence avec l'image transmise par la caméra,
- si l'image transmise et l'image de référence sont différentes, la mémorisation de la zone de l'image transmise qui diffère de l'image de référence en tant qu'assemblage de couleurs caractéristique d'une cible, le déclenchement de l'enregistrement des images, et la poursuite de la cible ainsi détectée et repérée.

Comme précédemment mentionné, l'invention concerne également un dispositif pour la mise en oeuvre du procédé selon l'invention. Ce dispositif comprend :
- au moins un rail disposé à une certaine distance du sol et circulant dans un tunnel sans tain,
- au moins une motrice circulant le long du rail dans les deux sens à une vitesse pouvant varier entre 0 et 3 m/s, surmontée d'une tourelle munie d'une plate-forme orientable sur 360° degrés en azimut et 180° en site, sur laquelle est fixée une caméra équipée d'un zoom commandable à distance, les organes moteurs et de commande de la motrice de la tourelle et la caméra étant alimentés en électricité par l'intermédiaire d'une première piste conductrice formée sur le rail, et
- un poste de surveillance équipé d'un calculateur raccordé à un moniteur comprenant un écran sur lequel sont affichées les images prises par la caméra et transmises par voie hertzienne, le calculateur engendrant des commandes destinées à la motrice, à la tourelle et au zoom, qui leur sont transmises au moyen d'une seconde piste conductrice formée sur le rail.

Selon une particularité de l'invention, le rail forme un circuit fermé, ce qui évite d'avoir à disposer de plusieurs caméras pour surveiller une zone relativement étendue présentant éventuellement des obstacles visuels.

Les modes de réalisation préférés du procédé selon l'invention seront décrits ci-après, à titre d'exemples non limitatifs, avec référence aux dessins annexés dans lesquels :
La figure 1 montre le schéma de principe du dispositif selon l'invention ;
La figure 2 montre en détail une motrice à laquelle est fixée une caméra par l'intermédiaire d'une tourelle ;
La figure 3 représente une vue de profil de la section transversale d'un rail ;
La figure 4 est une vue en perspective d'une motrice ; et
La figure 5 représente schématiquement la disposition des rails dans un site à surveiller.

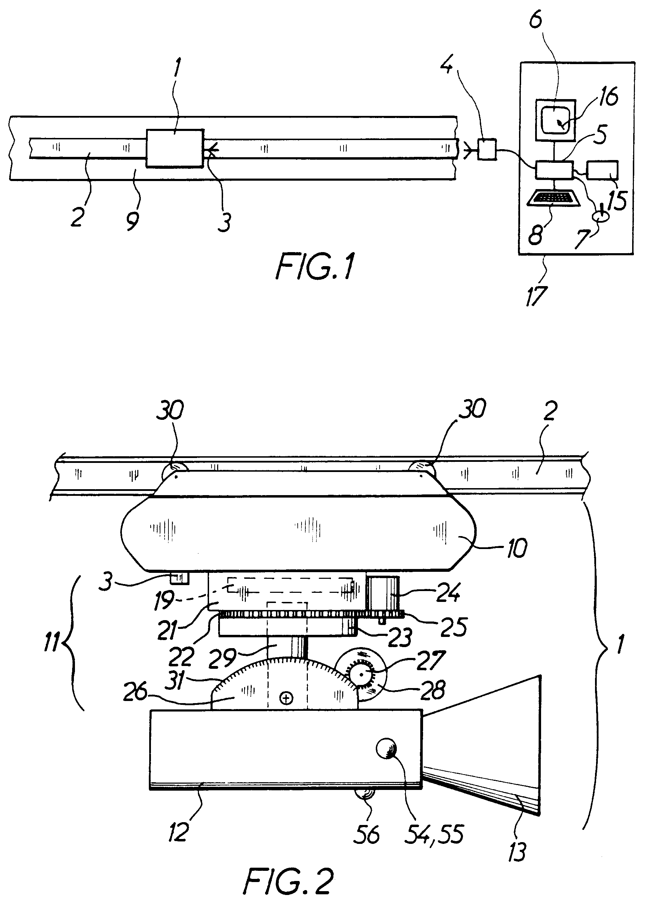

La figure 1 montre schématiquement un chariot 1 comprenant une motrice équipée d'une caméra vidéo, conçu pour circuler sur un rail 2 dans un tunnel sans tain 9 de manière à ce qu'on ne puisse pas apercevoir sa position sur le rail 2.

Le chariot 1 est équipé d'un émetteur 3 directionnel prévu pour envoyer les images vidéo prises par la caméra vers un récepteur 4 situé à l'extrémité du rail 2. Ce récepteur 4 est connecté à un calculateur 5 se trouvant dans un poste de surveillance 17, auquel est raccordé un moniteur 6 muni d'un écran destiné à visualiser les images prises par la caméra, un clavier 8, et un manipulateur 7 ou tout autre moyen de désignation équivalent. Le manipulateur 7 comprend un levier susceptible d'être incliné dans toutes les directions.

Tel que représenté sur la figure 2, le chariot 1 comprend une motrice 10 suspendue au rail 2 par des galets 30, et une tourelle 11 fixée sur la plate-forme de la motrice 10 et supportant une caméra 12 équipée d'un dispositif de mise au point automatique et d'un zoom 13.

La tourelle 11 comprend une embase 21 fixée à la plate-forme de la motrice et incluant les organes 19 de commande et d'émission des images. Sur l'embase 21 est monté rotatif un arbre 29 solidaire d'une roue de site 23 dont la périphérie forme une denture 22 qui s'engrène avec une roue dentée 25 entraînée par un micro-moteur 24. Un secteur d'azimut 26 solidaire de la caméra 12 est fixé à l'arbre 29 de manière à pourvoir pivoter autour d'un axe perpendiculaire à celui-ci. La périphérie du secteur d'azimut 26 est également munie d'une denture qui s'engrène avec une roue dentée 27 entraînée par un micro-moteur 28. La roue de site 23 est susceptible de tourner sur 360°, tandis que le secteur d'azimut 26 peut tourner sur 180°. De cette manière, la caméra peut être orientée dans toutes les directions.

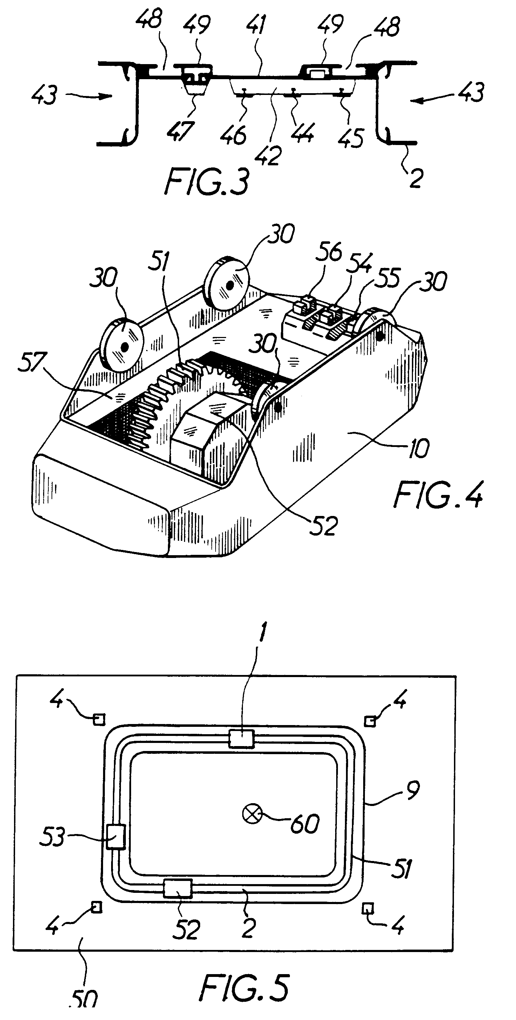

Sur la figure 3, le rail 2 comprend une portion 41 sensiblement plane reliant deux portions latérales 43 présentant un profil en U dont les branches sont orientées parallèlement à la portion plane 41. Ces portions latérales 43 sont destinées à recevoir Tes galets 30 de manière à maintenir le chariot 1 quelque soit sa position par rapport au rail 2.
Le rail 2 comporte également deux rainures de fixation 48 formées sur l'une des faces de la portion plane 41 et deux rainures 49 formées sur l'autre face, l'une étant destinée à recevoir un support 42 à plusieurs pistes conductrices, par exemple trois 44,45,46, tandis que l'autre maintient une crémaillère 47.
Les pistes conductrices 44 et 45 servent à alimenter le chariot en électricité et la piste 46 assure la transmission des commandes destinées à la motrice 10, à la tourelle 11 ou à la caméra 12.

Sur la figure 4, la face de la motrice 10 en regard du rail 2 présente un profil transversal en U. Les deux portions formant les branches du U supportent chacune les axes de deux galets 30. La partie plane entre ces portions comprend trois frotteurs 54,55,56 destinés à venir en contact avec les pistes conductrices 44,45,46 situées sur le rail 2. La motrice 10 est par ailleurs équipée d'un bloc moto-réducteur 52 avec frein à disque sur l'arbre rapide, capable d'entraîner le chariot 1 en marche avant ou arrière à une vitesse commandable de 0 à 3 m/s, l'arbre lent entraînant par l'intermédiaire d'un embrayage, une roue dentée 51 agissant sur la crémaillère 47.

Afin d'éviter d'avoir à utiliser plusieurs tronçons de rails et donc plusieurs caméras, pour couvrir la zone à surveiller 50, les rails 2 sont disposés en circuit fermé 51. Ainsi, tel que représenté sur la figure 5, le circuit sur lequel circule le chariot 1 comprend quatre portions de rails rectilignes reliées entre elles par des portions de rail courbes. Ce circuit 51 est couvert par un tunnel sans tain 9 dans lequel peut circuler librement le chariot 1. A proximité de chaque portion courbe, sont disposés des récepteurs volumétriques 4 destinés à recevoir les signaux de transmission des images prises par la caméra montée sur le chariot 1, quelque soit la position de ce dernier sur le circuit 51.

A la mise sous tension du dispositif selon l'invention, le calculateur 5 du poste de surveillance 17 envoie des commandes d'initialisation aux équipements installés dans le chariot 1, par l'intermédiaire des rails 2.
A la suite de la réception de ces commandes, la motrice 10 se place à une position prédéterminée du circuit 51, la tourelle 11 oriente la caméra 12 dans une direction prédéterminée, et le zoom est réglé à son ouverture maximum. La position du chariot 1 et l'orientation de la caméra 12 sont choisies de manière à pouvoir visualiser la majeure partie de la zone à surveiller 50.
Les images vidéo prises par la caméra sont transmises par voie hertzienne à l'un des récepteurs 4 qui les transmet au calculateur 5. Ces images sont affichées sur l'écran du moniteur 6 et, en surimpression au centre de l'écran apparaît un marqueur 16 présentant la forme d'une flèche.

Si l'opérateur incline le levier du manipulateur dans une direction, le calculateur 5 déplace le marqueur 16 sur l'image affichée à l'écran dans la même direction, sur une distance proportionnelle à la durée pendant laquelle le levier du manipulateur 7 est resté incliné. La vitesse de déplacement du marqueur 16 est déterminée en fonction de l'angle d'inclinaison du levier.
Parallèlement, le calculateur 5 élabore et envoie des commandes au chariot 1 de manière à le déplacer en direction du point désigné par le marqueur 16, à orienter la caméra 12 vers ce point et à régler le zoom en fonction de la distance entre la caméra et le point désigné. Il en résulte que le marqueur 16 sur l'écran du moniteur 6 va avoir tendance à être ramené au centre de l'écran, seul l'actionnement du manipulateur 7 pouvant déplacer le marqueur 16 par rapport à l'image présente à l'écran.

De cette manière, lorsque l'opérateur a repéré une cible 60, il lui suffit de maintenir le marqueur 16 sur la cible 60 au moyen du manipulateur 7, tandis que le calculateur 5 commande la motrice 10, la tourelle 11 et la caméra 12 de manière à centrer la caméra sur la cible 60 ainsi désignée.
A cet effet, le calculateur 5 détermine périodiquement les coordonnées cartésiennes de la cible 60 relativement à la zone surveillée à partir de la position de la motrice 10, de l'orientation de la tourelle 11 qui permettent de déterminer un point de référence et une direction, et à partir de la distance entre l'objectif de la caméra et la cible 60 déterminée par le dispositif de mise au point automatique équipant la caméra 12.
Par ailleurs, le calculateur 5 dispose dans sa mémoire d'une table indiquant pour chaque position de la cible 60, une position préférentielle de la motrice 10 sur le circuit 51.

L'opérateur peut déclencher à l'aide d'une touche du clavier 8, l'enregistrement par un magnétoscope 15 des images prises par la caméra 12.

Selon un autre mode d'exécution de l'invention, le calculateur 5 est équipé d'un logiciel de reconnaissance de formes disponible dans le commerce et l'opérateur peut à l'aide d'une touche du clavier, déclencher la poursuite automatique d'une cible 60 pointée par le marqueur 16. Cette opération de poursuite consiste pour le calculateur 5 à détourer et mémoriser l'assemblage de couleurs constituant la cible 60 ainsi désignée, à rechercher cet assemblage dans les images transmises ultérieurement par la caméra 12, et à commander la motrice 10, la tourelle 11 et le zoom 13 de la caméra 12 en fonction de la position de l'assemblage de couleurs dans les images transmises de manière à centrer l'image de la cible 60 sur l'écran, l'ouverture du zoom 13 étant fonction de la distance entre la cible 60 et le centre de l'image.

Avantageusement, le circuit 51 peut comprendre plusieurs chariots 1,52,53, équipés de caméras qui transmettent des images au calculateur 5 par l'intermédiaire des récepteurs 4, l'opérateur disposant d'une touche du clavier 8 pour sélectionner les images prises par l'une des caméras à afficher sur l'écran du moniteur 6.

Pour pouvoir assurer efficacement la poursuite d'une cible 60, le calculateur 5 dispose dans sa mémoire d'une autre table affectant à chaque caméra une portion de la zone à surveiller, les portions associées aux différentes caméras présentant des zones communes.

En phase de poursuite, le calculateur 5 commande, à partir de la position courante de la cible mémorisée, la caméra sélectionnée. Lorsque la cible 60 arrive dans une zone commune à deux caméras, le calculateur 5 positionne et oriente la seconde caméra vers la cible 60 et recherche dans les images prises par la seconde caméra l'assemblage de couleurs mémorisé. Si la cible 60 se dirige de la zone de surveillance affectée à la première caméra vers celle affectée à la seconde, le calculateur 5 sélectionne les images transmises par la seconde caméra.
Ainsi, le logiciel de commande des chariots est conçu de manière à faire travailler les caméras en meute.

Selon un autre mode d'exécution de l'invention, le dispositif de surveillance est conçu de manière à pouvoir fonctionner automatiquement, sans l'intervention d'un opérateur pour surveiller toute intrusion dans une zone déterminée.

Pour cela, le chariot 1 est placé à un endroit stratégique de cette zone et la caméra 12 est orientée dans une direction prédéterminée. L'image ainsi prise par la caméra est préalablement mémorisée par le calculateur 5 comme image de référence et toutes les images transmises par la caméra 12 sont ensuite comparées avec l'image de référence. Dès qu'une différence est détectée, la partie différente de l'image transmise par la caméra 12 est détourée et mémorisée comme étant une cible. Le calculateur 5 déclenche ensuite la poursuite de la cible, l'enregistrement des images sur le magnétoscope 15, et éventuellement l'émission d'un signal d'alarme.

Avantageusement, le chariot 1 est équipé de moyens de localisation, par exemple, deux microphones directionnels 54,55 placés de part et d'autre de la caméra 12, et d'un moyen de détection, tel qu'un microphone 56 très sensible couplé à un amplificateur de sons. Cette disposition permet de placer la caméra 12 dans un état de veille après avoir été placée suivant un angle de vision optimum prédéterminé et une fois que le calculateur 5 ait mémorisé l'image de référence prise par la caméra 12 dans cette position. Les sons captés par les microphones sont transmis par le signal vidéo de transmission des images au calculateur 5 qui active la caméra 12 dès qu'un son est détecté, et qui déclenche une phase de poursuite, les microphones directionnels servant à localiser la cible à l'origine du son.

En outre, si la caméra vidéo 12 fonctionne en infrarouge, une telle surveillance peut s'effectuer dans l'obscurité.

## Revendications

1. Procédé de télésurveillance utilisant au moins une caméra (12) équipée d'un zoom (13), fixée par l'intermédiaire d'une tourelle (11) orientable dans toutes les directions sur une motrice (10) mobile sur rails (2) dans un tunnel sans tain (9), la motrice (10), l'orientation et le zoom (13) de la caméra (12) étant commandés à l'aide d'un manipulateur (7), les images prises par la caméra (12) étant transmises à un poste de surveillance (17) comprenant un calculateur (5) et un moniteur (6) sur l'écran duquel elles sont affichées,
caractérisé en ce qu'il comprend les étapes suivantes :
- le réglage de la position, de l'orientation et du zoom (13) de la caméra (12) à des valeurs respectives prédéterminées de manière à visualiser sur l'écran du moniteur (6) la plus grande partie de la zone à surveiller (50),
- la détection et le marquage d'une cible (60) par désignation de celle-ci d'une façon compréhensible pour le calculateur,
- la poursuite de la cible (60) durant laquelle sont déterminés en fonction des déplacements de la cible (60), le sens de déplacement de la motrice (10) et sa vitesse, l'orientation de la caméra (12), et la valeur de réglage du zoom (13), de manière à centrer l'image de la cible (60) sur l'écran, et
- l'enregistrement des images à partir de l'instant où la cible (60) est détectée et marquée.

2. Procédé selon la revendication 1,
caractérisé en ce qu'il comprend l'affichage en surimpression sur les images affichées sur l'écran du moniteur (6), d'un marqueur (16) qu'un opérateur peut déplacer à l'aide du manipulateur (7), la détection de la cible (60) étant effectuée par l'opérateur qui observe les images transmises sur l'écran du moniteur (6), la position de la cible (60) et ses déplacements étant introduits par l'opérateur au moyen du marqueur (16) qu'il déplace pour le maintenir a tout instant sur la cible (60).

3. Procédé selon la revendication 1,
caractérisé en ce qu'il comprend en outre la mémorisation de l'assemblage de couleurs caractéristique de la cible (60) désignée par l'opérateur sur une image transmise par la caméra (12) et affichée à l'écran du moniteur (6), et la détermination des déplacements de la cible (60) durant la poursuite, à l'aide d'un dispositif de reconnaissance de forme, par la recherche de l'assemblage de couleurs mémorisé dans les images transmises au poste de surveillance (17).

4. Procédé selon la revendication 3,
caractérisé en ce qu'il comprend en outre :
- la mémorisation en tant qu'image de référence de l'image reçue lorsque la position, l'orientation et le zoom (13) de la caméra (12) sont réglées auxdites valeurs respectives prédéterminées,
- la comparaison périodique de l'image de référence avec l'image transmise par la caméra (12),
- si l'image transmise et l'image de référence sont différentes, la mémorisation de la zone de l'image transmise qui diffère de l'image de référence en tant qu'assemblage de couleurs caractéristique d'une cible (60), le déclenchement de l'enregistrement des images, et la poursuite de la cible (60) ainsi détectée et repérée.

5. Procédé selon la revendication 4,
caractérisé en ce qu'il comprend l'émission d'un signal d'alarme si l'image transmise et l'image de référence sont différentes.

6. Procédé selon l'une des revendications précédentes,
caractérisé en ce qu'il comprend le calcul périodique des coordonnées cartésiennes de la position de la cible (60) relativement à la zone surveillée (50), à partir de la position de la motrice (10), de l'orientation de la tourelle (11) qui permettent de déterminer un point de référence et une direction, et a partir de la distance entre la caméra (12) et la cible (60) déterminée par le dispositif de mise au point automatique équipant la caméra (12).

7. Procédé selon l'une des revendications précédentes,
caractérisé en ce, durant la poursuite d'une cible (60), la position de la motrice (10) est déterminée par la nouvelle position de la cible (60), à l'aide d'une table indiquant pour chaque position de la cible (60) une position préférentielle de la motrice (10).

8. Procédé selon l'une des revendications précédentes,
caractérisé en ce qu'il utilise au moins deux caméras (1,52,53), chacune étant équipée d'un zoom (13), fixée par l'intermédiaire d'une tourelle (11) orientable dans toutes les directions sur une motrice (10) respective mobile sur rails (2) dans un tunnel sans tain (9), les motrices, l'orientation et le zoom (13) des caméras étant commandés à l'aide du manipulateur (7), les images prises par les caméras (1,52,53) étant transmises au poste de surveillance (17) comprenant un calculateur (5), un clavier (8) permettant notamment de sélectionner une caméra et un moniteur (6) à l'écran duquel sont affichées les images prises par la caméra sélectionnée.

9. Procédé selon la revendication 8,
caractérisé en ce qu'il comprend l'affectation d'une zone de surveillance à chaque caméra (1,52,53), les zones de surveillance présentant des parties communes, et si durant la poursuite d'une cible (60), celle-ci se trouve dans une zone commune à deux caméras, la détermination de la direction vers laquelle se dirige la cible (60) et la sélection de la caméra vers la zone de surveillance de laquelle se dirige la cible (60).

10. Dispositif pour la mise en oeuvre du procédé selon l'une des revendications précédentes,
caractérisé en ce qu'il comprend :
- au moins un rail (2) disposé à une certaine distance du sol et circulant dans un tunnel sans tain (9),
- au moins une motrice (10) circulant le long du rail dans un sens et à une vitesse commandables à distance,
- une tourelle (11) fixée sur la motrice et munie d'une plate-forme dont l'orientation, susceptible de varier sur 360° degrés en azimut et 180° en site, est commandable à distance,
- une caméra (12) fixée sur la plate-forme orientable et équipée d'un zoom commandable à distance, les organes moteurs (24,28) et de commande (19) de la motrice (10) de la tourelle et la caméra étant alimentés en électricité par l'intermédiaire d'une première piste conductrice formée sur le rail (2), et
- un poste de surveillance (17) équipé d'un calculateur (5) raccordé à un moniteur (6) comprenant un écran sur lequel sont affichées les images prises par la caméra (12) et transmises par voie hertzienne, le calculateur (5) engendrant des commandes destinées à la motrice (10), à la tourelle (11) et au zoom (13) qui leur sont transmises au moyen d'une seconde piste conductrice formée sur le rail (2).

11. Dispositif selon la revendication 10,
caractérisé en ce que le rail (2) forme un circuit fermé (51), le signal de transmission des images prises par la caméra (12) étant capté par au moins un récepteur volumétrique (4) connecté au calculateur (5), quelque soit la position de la motrice (10) sur le circuit fermé (51).

12. Dispositif selon l'une des revendications 10 et 11,
caractérisé en ce qu'il comprend plusieurs caméras (1,52,53) qui sont montées sur des motrices (10) mobiles sur rail, et qui sont contrôlées par le calculateur (5) de manière à pouvoir suivre une même cible (60).

13. Dispositif selon l'une des revendications 10 à 12,
caractérisé en ce que la caméra est équipée d'un moyen de détection ultrasensible, et d'un moyen de localisation de la cible (60), les informations détectées par lesdits moyens de détection et de localisation étant transmis par voie hertzienne au calculateur (5) qui active la caméra (12) dès que le moyen de détection est activé par la présence d'une cible (60), et qui déclenche la poursuite de la cible (60) localisée grâce aux moyens de localisation.

14. Dispositif selon la revendication 13,
caractérisé en ce que le moyen de détection est un microphone ultra-sensible (56) couplé à un amplificateur de sons.

15. Dispositif selon l'une des revendications 13 et 14,
caractérisé en ce que le moyen de localisation comprend deux microphones directionnels (54,55) placés de par et d'autre de la caméra (12).

16. Dispositif selon l'une des revendications 10 à 15,
caractérisé en ce que la caméra (12) fonctionne en infrarouge.

17. Dispositif selon l'une des revendications 10 à 16,
caractérisé en ce que le rail (2) comprend une portion sensiblement plane (41) reliant deux portions latérales (43) présentant un profil transversal en U dont les branches sont parallèles à ladite portion latérale (41), la motrice (10) étant muni de galets (30) destinés à s'engager simultanément dans les deux portions latérales (43), de manière à ce que la motrice (43) soit maintenue contre le rail (2) quelque soit son orientation.

18. Dispositif selon l'une des revendications 10 à 17,
caractérisé en ce que la motrice (10) comprend un bloc moto-réducteur (52) entraînant une roue dentée (51), le rail (2) comprenant une crémaillère (47) sur laquelle agit la roue dentée (51).
